# EUROPEAN PATENT APPLICATION

(11) **EP 1 255 055 A1**
(43) Date of publication of application: **06.11.2002**
(21) Application number: 02076268.8
(22) Date of filing: 03.04.2002
(51) Int. Cl.: F16D 66/02, F16D 51/20

(54) **Drum brake and wear sensor therefor**

(30) Priority: 25.04.2001 FR 0105581
(71) Applicant: Delphi Technologies, Inc., Troy, MI 48007 (US)
(72) Inventor: Trenado, Guillaume, 77090 Collegien (FR); Batut, Georges, 78680 Epone (FR); Perus, Remy, 95320 St-Leu-la-forêt (FR)
(74) Representative: Denton, Michael John

(57) **Abstract**

A drum brake (10) comprising a drum (12); a first brake shoe (14) which is pivotally mounted at one end (30) thereof and having friction lining material (34) thereon; a second brake shoe (16) which is pivotally mounted at one end (32) thereof and having friction lining material (36) thereon; spring means (38) biasing the friction material of each brake shoe away from the drum; at least one actuator (18) engaging the other end of each brake shoe for moving the friction lining material of each brake shoe into contact with the drum on actuation thereof against the bias of the spring means; and a wear sensor (40) mounted on one of the brake shoes in a position circumferentially spaced from the friction lining material thereon, and having a free end (54) positioned adjacent the drum; wherein the free end of the wear sensor engages the drum to produce an audible signal solely when the or each actuator is actuated, and when the radial height of the friction lining material is at or below a predetermined minimum. Provides a cheap wear sensor for a drum brake.

## Description

### Technical Field

The present invention relates to a drum brake for a motor vehicle, and in particular to a wear sensor for a drum brake.

### Background of the Invention

A drum brake consists of a drum, first and second brake shoes; and an actuator for moving the friction lining material on each brake shoe into engagement with the drum. It is known to provide an electric wear sensor which provides a signal when the brake shoes are worn and need replacing. Electric wear sensors are expensive. GB-A-2103737 and WO-A-95/03500 describe audible wear sensors for disc brakes.

### Summary of the Invention

It is an object of the present invention to provide an audible wear sensor for a drum brake.

A drum brake in accordance with the present invention comprises a drum; a first brake shoe which is pivotally mounted at one end thereof and having friction lining material thereon; a second brake shoe which is pivotally mounted at one end thereof and having friction lining material thereon; spring means biasing the friction material of each brake shoe away from the drum; at least one actuator engaging the other end of each brake shoe for moving the friction lining material of each brake shoe into contact with the drum on actuation thereof against the bias of the spring means; and a wear sensor mounted on one of the brake shoes in a position circumferentially spaced from the friction lining material thereon, and having a free end positioned adjacent the drum; wherein the free end of the wear sensor engages the drum to produce an audible signal solely when the or each actuator is actuated, and when the radial height of the friction lining material is at or below a predetermined minimum.

The present invention provides a wear sensor for a drum brake which is cheap.

### Brief Description of the Drawings

The present invention will now be described, by way of example, with reference to the accompanying drawings, in which:-
Figure 1 is a side view, partly in cross-section, of a drum brake in accordance with the present invention;
Figure 2 is a side view of a portion of the drum and one of the brake shoes with the wear sensor of the drum brake of Figure 1, when actuated, and when the brake shoe is not worn;
Figure 3 is a side view of a portion of the drum and one of the brake shoes with the wear sensor of the drum brake of Figure 1, when actuated, and when the brake shoe is worn; and
Figure 4 is an enlarged perspective view of the wear sensor of the drum brake of Figure 1.

### Description of the Preferred Embodiment

Referring to the drawings, a drum brake 10 in accordance with the present invention is shown which comprises a drum 12, first and second brake shoes 14, 16 respectively; a hydraulic actuator 18; a shoe spring 38; and a wear sensor 40. The hydraulic actuator 18 is fluidly connected to the braking system of a motor vehicle (not shown) and comprises a pair of pistons 22, 24. Each piston 22,24 engages one end 26,28 respectively of one of the brake shoes 14,16 respectively. Each brake shoe 14,16 is pivotally mounted at its other end 30,32 respectively in contact with an abutment 33. Each brake shoe 14,16 comprises a plate member 42,44 respectively with an integral rim 46,48 respectively. Friction lining material 34,36 is carried on the rim 46,48 respectively of each brake shoe 14,16 respectively and directed towards the drum 12. The friction lining material 34,36 has a radial height Y which varies between a maximum value when the brake shoes 14,16 are new, and a predetermined minimum value when the brake shoes are worn and need replacing.

The shoe spring 38 retains the brake shoes 14,16 in engagement with the hydraulic actuator 18 and the abutment 33. The shoe spring 38 biases the friction lining material 34,36 out of engagement with the drum 12 with a gap X therebetween. The drum brake 10 may include a wear adjuster 20 (for example, as described in GB-A-2256463) for maintaining the gap X at a predetermined value.

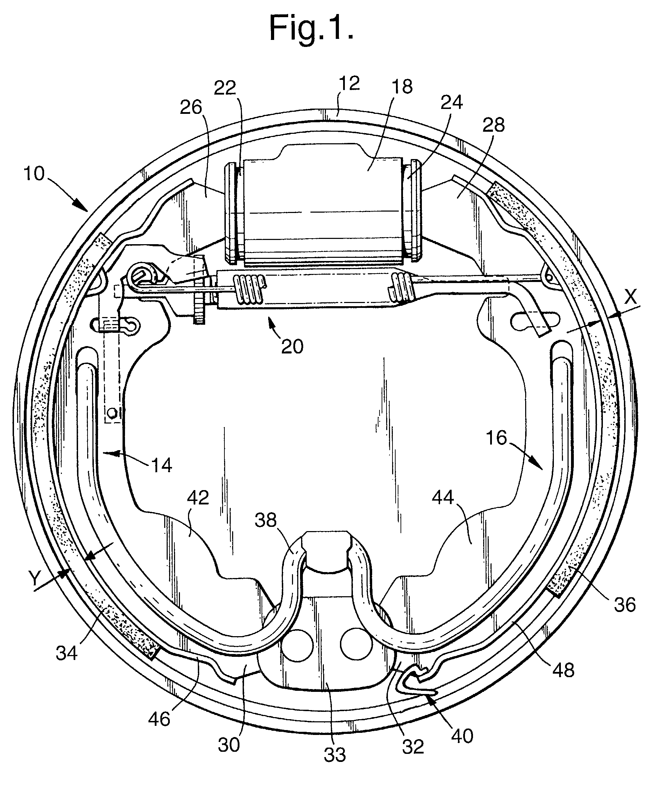

On actuation of the hydraulic actuator 18, the pistons 22,24 push the brake shows 14,16 respectively against the bias of the shoe spring 38 to close the gap X. The friction lining material 34,36 on each brake shoe 14,16 engages the drum 12 to provide braking. On release, the shoe spring 38 moves the brake shoes 14,16 back to the rest position shown in Figure 1.

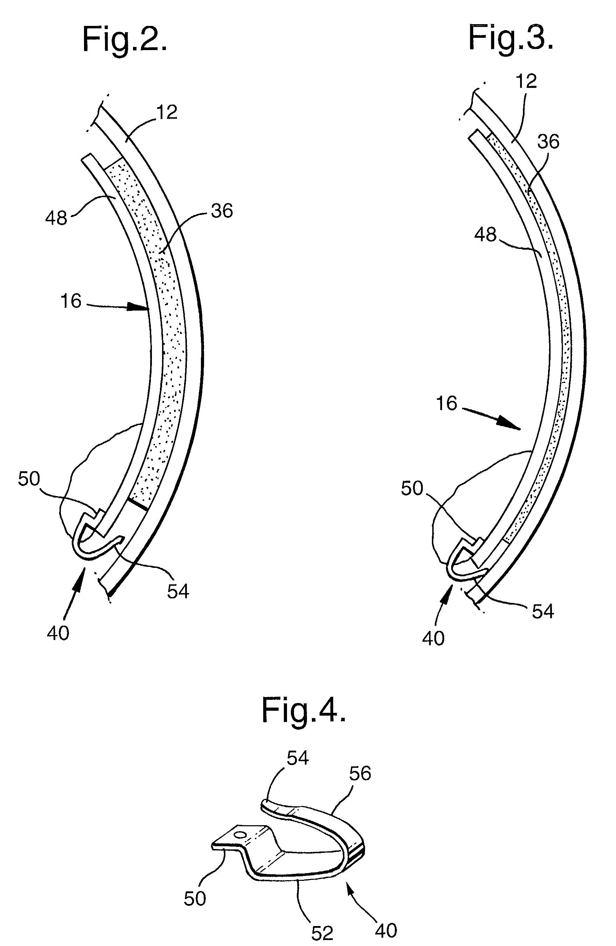

The wear sensor 40 (Figure 4) is formed from bent sheet metal and is substantially U-shaped or V-shaped. Other shapes for the wear sensor 40 may be used. The free end 50 of one arm 52 of the wear sensor 40 is secured to the rim 48 of the second brake shoe 16 (preferably at one end of the shoe) in any suitable manner, such as screwing, riveting or welding. The wear sensor 40 may be mounted elsewhere on the second brake shoe 16. The wear sensor 40 is mounted on the second brake shoe 16 at a position which is circumferentially spaced from the friction lining material 36. The free end 54 of the other arm 56 of the wear sensor 40 extends to a position adjacent to the drum 12. As an alternative, the wear sensor 40 may be mounted on the first brake shoe 14, or wear sensors may be mounted on each brake shoe.

In the rest position of the drum brake 10 (Figure 1), the free end 54 of the other arm 56 of the wear sensor 40 is spaced from the drum 12. In the actuated position of the drum brake 10, and when the radial height of the friction lining material 34,36 is greater than the predetermined minimum (Figure 2), the free end 54 of the other arm 56 of the wear sensor 40 is spaced from the drum 12. In the actuated position of the drum brake 10, and when the radial height of the friction lining material 34,36 is at or below the predetermined minimum (Figure 3), the free end 54 of the other arm 56 of the wear sensor 40 engages the drum 12. Due to the engagement with the drum 12, the other arm 56 of the wear sensor 40 acts like a vibrating reed and generates a distinct and audible noise. Such a noise is an indication that the brake shoes 14,16 are worn and need replacing.

The above described embodiment uses a single actuator 18 for actuating both brake shoes 14,16. The present invention also includes a drum brake having a separate actuator for each brake shoe. Although a hydraulic actuator has been described above, the present invention is also applicable to drum brakes having other types of actuator, such as an electric actuator. Further, the present invention applies to drum brakes in which the brake shoes move radially outwards to engage the drum (as described above), and to drum brakes in which the brake shoes move radially inwards to engage the drum.

The present invention provides a wear sensor for a drum brake which is cheap to produce and is easy to install.

## Claims

1. A drum brake (10) comprising a drum (12); a first brake shoe (14) which is pivotally mounted at one end (30) thereof and having friction lining material (34) thereon; a second brake shoe (16) which is pivotally mounted at one end (32) thereof and having friction lining material (36) thereon; spring means (38) biasing the friction material of each brake shoe away from the drum; at least one actuator (18) engaging the other end of each brake shoe for moving the friction lining material of each brake shoe into contact with the drum on actuation thereof against the bias of the spring means; and a wear sensor (40) mounted on one of the brake shoes in a position circumferentially spaced from the friction lining material thereon, and having a free end (54) positioned adjacent the drum; wherein the free end of the wear sensor engages the drum to produce an audible signal solely when the or each actuator is actuated, and when the radial height of the friction lining material is at or below a predetermined minimum.

2. A drum brake as claimed in Claim 1, wherein the wear sensor (40) is formed from bent sheet metal.

3. A drum brake as claimed in Claim 1 or Claim 2, wherein the wear sensor (40) is substantially U-shaped or V-shaped; and wherein the free end (54) is at the end of one of the arms (56).

4. A drum brake as claimed in any one of Claims 1 to 3, wherein the brake shoes (14,16) include a rim (46,48) on which the friction lining material (34,36) is mounted; and wherein the wear sensor (40) is mounted on the rim of one of the brake shoes at one end thereof.
